# EUROPÄISCHE PATENTSCHRIFT

(11) **EP 4 375 047 B1**
(45) Veröffentlichungstag und Bekanntmachung des Hinweises auf die Patenterteilung: **10.09.2025**
(21) Anmeldenummer: 23210587.4
(22) Anmeldetag: 17.11.2023
(51) Int. Cl.: B29C 49/56, B29C 49/78, B29C 49/36

(54) **BLASFORMMASCHINE MIT ERKENNUNG EINES VERRIEGELUNGSZUSTANDES**
BLOW MOLDING MACHINE WITH LOCK STATE DETECTION
MACHINE DE MOULAGE PAR SOUFFLAGE AVEC DÉTECTION D'ÉTAT DE VERROUILLAGE

(30) Priorität: 23.11.2022 DE 202022106566 U
(43) Veröffentlichungstag der Anmeldung: 29.05.2024
(73) Patentinhaber: Krones AG, 93073 Neutraubling (DE)
(72) Erfinder: Fleischmann, Hans-Juergen, 93073 Neutraubling (DE); Hoellriegl, Thomas, 93073 Neutraubling (DE)
(74) Vertreter: Bittner, Bernhard

(56) Entgegenhaltungen:
- EP-A1- 3 431 253
- CN-B- 105 538 663
- KR-A- 20170 134 100
- US-A1- 2014 151 940

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Dabei werden üblicherweise Kunststoffvorformlinge in Blasformen eingegeben und mit einem fließfähigen und insbesondere gasförmigen Medium beaufschlagt. Dieser Prozess ist dabei relativ aufwendig und umfasst üblicherweise auch das Dehnen der Kunststoffvorformlinge mittels einer Reckstange. Im Einzelnen werden erwärmte Kunststoffvorformlinge in Blasformen eingegeben, diese anschließend verschlossen und verriegelt und anschließend werden die Kunststoffvorformlinge expandiert. Nach diesem Vorgang wird die Blasform wieder entriegelt, geöffnet und die gefertigten Behältnisse werden entnommen. Gattungsgemäße Vorrichtungen und Verfahren sind in den Patentschriften US2014/151940A1, CN105538663B, KR20170134100A und EP3431253A1 beschrieben.

Beim Betrieb derartiger Vorrichtungen kann es dazu kommen, dass die Blasform aus unterschiedlichen Gründen nicht ordnungsgemäß verriegelt wird. In diesen Fällen wird im Stand der Technik ein Nothalt der Maschine eingeleitet. Die Ursache für diesen Verriegelungsfehler ist oftmals ein schlecht übergebener Kunststoffvorformling, der zwischen den beiden Formhälften eingeklemmt wurde. Durch den Nothalt soll ein Maschinenschaden verhindert werden.

Die Unterbrechung des Produktionsprozesses hat jedoch zur Folge, dass die im Heizmodul zur Produktion vorbehandelten und insbesondere erwärmten Kunststoffvorformlinge unbrauchbar für die Behälterproduktion werden. Auf diese Weise sind sowohl die Maschinenverfügbarkeit als auch die Effizienz durch diese Unterbrechung reduziert. Unbrauchbar gewordene Kunststoffvorformlinge müssen entsorgt werden.

Daneben wird durch diese Unterbrechung auch Arbeitskraft gebunden, und es kann sogar die Verfügbarkeit einer gesamten Linie beeinträchtigt sein.

Der vorliegenden Erfindung liegt daher die Aufgabe zugrunde, die Maschineneffizienz insbesondere auch bei derartigen Störfällen zu erhöhen. Dies wird erfindungsgemäß durch die Gegenstände der unabhängigen Patentansprüche erreicht. Vorteilhafte ausführungsformen und Weiterbildungen sind Gegenstand der Unteransprüche.

Eine erfindungsgemäße Vorrichtung zum Umformen von Kunststoffvorformlingen zu Kunststoffbehältnissen weist einen drehbaren Träger auf, an dem eine Vielzahl von Umformungsstationen zum Umformen der Kunststoffvorformlinge zu den Kunststoffbehältnissen angeordnet ist, wobei die Umformungsstationen jeweils Beaufschlagungseinrichtungen aufweisen, um die Kunststoffvorformlinge mit einem fließfähigen Medium zu deren Expansion zu beaufschlagen und wobei die Umformungsstationen jeweils Blasformträger aufweisen, an denen Blasformen anordenbar sind, innerhalb derer die Kunststoffvorformlinge zu den Kunststoffbehältnissen umformbar sind und ein erster Bewegungsmechanismus vorgesehen ist, um die Blasformen zu öffnen und/oder zu schließen und wobei weiterhin ein Verriegelungsmechanismus vorgesehen ist, um die Blasformträger wenigstens zeitweise während des Expansionsvorgangs der Kunststoffvorformlinge miteinander zu verriegeln und insbesondere derart zu Verriegeln dass die Blasformen durch den Verriegelungsmechanismus in einem geschlossenen Zustand gehalten werden.

Erfindungsgemäß weist die Vorrichtung wenigstens eine Sensoreinrichtung und/oder eine Erfassungseinrichtung auf, welche einen Verriegelungszustand des Verriegelungsmechanismus wenigstens einer Umformungsstation erfasst und welche wenigstens ein Signal ausgibt, welches für diesen Verriegelungszustand charakteristisch ist.

Insbesondere kann die Sensoreinrichtung feststellen, ob die Blasformträger und/oder die Blasformen ordnungsgemäß verriegelt und insbesondere die Blasform daher ordnungsgemäß geschlossen sind.

Es wird daher vorgeschlagen, mittels einer Sensoreinrichtung ggf. auch mittels einer Vielzahl von Sensoreinrichtungen zu erfassen, ob die Umformungsstation(en) ordnungsgemäß verriegelt ist/sind. Durch den Zustand der Verriegelung lässt sich darauf schließen, ob die Blasform ordnungsgemäß verschlossen ist, was wiederum eine Voraussetzung für eine ordnungsgemäße Durchführung eines Blasformvorgangs ist.

Besonders bevorzugt weisen die Umformungsstationen jeweils Reckstangen auf, um die Kunststoffvorformlinge in ihrer Längsrichtung zu dehnen. Diese Reckstangen werden dabei bevorzugt während des Expansionsvorgangs in die Kunststoffvorformlinge eingeführt und dehnen diese in deren Längsrichtung. Bevorzugt werden daher die Reckstangen während des Expansionsprozesses wenigstens zeitweise entlang ihrer Längsrichtung bewegt.

Bei der Beaufschlagungseinrichtung handelt es sich insbesondere um eine Blasdüse, welche an die Mündungen der Kunststoffvorformlinge anlegbar ist, um diese mit dem fließfähigen Medium zu beaufschlagen.

Besonders bevorzugt weisen die Blasformen mehrere Blasformteile auf, und insbesondere wenigstens zwei Seitenteile und ein Bodenteil.

Bevorzugt weist die Vorrichtung eine Zuführeinrichtung und insbesondere einen Zuführstern oder ein Zuführrad auf, welches die Kunststoffvorformlinge den Umformungsstationen zuführt. Besonders bevorzugt weist die Vorrichtung eine Abführeinrichtung und insbesondere ein Abführrad oder ein Abführstern auf, der die gefertigten Behältnisse von den Umformungsstationen abführt.

Durch die hier beschriebene Funktion, sollen Maschinenstillstandzeiten verringert werden, Scrap (Ausschuss) vermieden werden und weniger Arbeitskraft gebunden werden.

Besonders bevorzugt sind die Blasformseitenteile an Blasformträgern angeordnet und mindestens ein Blasformseitenteile und bevorzugt diese beiden Blasformseitenteile können zum Schließen und Öffnen der Blasformen geschwenkt werden. Es wäre auch denkbar, dass ein Blasformseitenteil stationär bezüglich des Blasrads angeordnet ist. Bei einer bevorzugten Ausführungsform ist dabei ein Bewegungsmechanismus zum Bewegen der Formträgerhälften vorgesehen. Besonders bevorzugt ist dieser Bewegungsmechanismus aus einem System von Führungskurven, Rollen und/oder Hebeln gebildet.

Die Zuführeinrichtung, beispielsweise ein Einlaufstern übergibt bei einer geöffneten Blasform einen Kunststoffvorformling an die Blasform und die Abführeinrichtung, d. h. der Auslaufstern entnimmt das fertige Behältnis. Bei der Übergabe des Kunststoffvorformlings in die Blasform kann es, wie oben erwähnt zu Übergabefehlern kommen, wobei ein Kunststoffvorformling beispielsweise beim Schließen der Blasform zwischen den Formhälften eingeklemmt wird. In diesem Fall kann der Verriegelungsprozess gestört werden.

Das Verriegeln der Formhälften zueinander wird vorteilhaft durch eine Verriegelungsklappe erreicht. Dabei kann ein erstes Verriegelungselement des Verriegelungsmechanismus, welches an einem der beiden Blasformträger angeordnet ist, in ein zweites Verriegelungselement des Verrieglungsmechanismus, welches an dem anderen Formträger angeordnet ist, einschwenken und so die Verriegelung herbeiführen. Bevorzugt ist dieses erste Verriegelungselement dabei bezüglich einer Schwenkachse schwenkbar, welche parallel zu einer Längsrichtung des zu expandierenden Kunststoffvorformlings verläuft.

Bei korrekt verriegelter Blasform wird der Blasprozess eingeleitet. Eine nicht korrekt verriegelte Form wird mit der hier beschriebenen Sensoreinrichtung (vorzugsweise INI oder Lichtschranke) erkannt und man geht davon aus, dass wahrscheinlich ein Kunststoffvorformling eingeklemmt wurde und dadurch die Blasform nicht korrekt verriegelt wurde.

Im Rahmen der Erfindung wird nunmehr vorgeschlagen, in diesem Fall (nicht verriegelter Formträger) nicht sofort einen Nothalt einzuleiten. Es wird versucht, den Kunststoffvorformling der Vorrichtung zu entnehmen und insbesondere bei laufender Produktion zu entnehmen.

Bei einer bevorzugten Ausführungsform weist die Vorrichtung eine Steuerungseinrichtung auf, welche die Vorrichtung unter Berücksichtigung des von der ersten Sensoreinrichtung ausgegebenen Signals steuert. Dabei kann diese Steuerungseinrichtung beispielsweise die Vorrichtung oder entsprechende Antriebe anweisen, bei einem festgestellten Fehler einer bestimmten Umformungsstation dieser bestimmten Umformungsstation zumindest bei dem nächsten Umlauf keinen weiteren Vorformling mehr zuzuführen, insbesondere um den Blasprozess für die Dauer der Störung zu unterbinden.

Weiterhin kann die Vorrichtung beispielsweise bewirken, dass eine Klammer am Auslaufstern den Kunststoffvorformling auswirft oder aber der Kunststoffvorformling aufgrund der Fliehkraft bei einer geöffneten Umformungsstation eigenständig aus der Blasform fliegt, bzw. geschleudert wird. Bevorzugt wird diese Umformungsstation im weiteren Verlauf der Produktion nicht mit einem Kunststoffvorformling bestückt. Die Steuerungseinrichtung kann bewirken, dass eine Kontrollrunde durchgeführt wird. Es wird kontrolliert, ob die Umformungsstation (insbesondere, wenn sie nicht mit einem Kunststoffvorformling bestückt ist) nun wieder korrekt verriegelt wird. Dabei ist es möglich, die Anzahl dieser Kontrollrunden einzustellen.

Wird bei einer Kontrollrunde festgestellt, dass die betreffende Blasform wieder korrekt verriegelt wurde, dann wird diese Station in der nächsten Runde wieder mit einem Kunststoffvorformling bestückt und ein Behältnis geblasen. Bei einem korrekt geblasenen Behältnis läuft die Produktion weiter, dabei wäre es auch möglich, dieses Behältnis (vorsichtshalber) auszuwerfen.

Für die weitere Produktion stehen dann lediglich ein Paar wenige Behältnisse nicht zur Verfügung. Konnte jedoch die Form nicht ordnungsgemäß verriegelt werden, können bevorzugt je nach Vorbelegung mehrere Kontrollrunden durchfahren werden. Erst danach führt eine nicht korrekt verriegelte Form zu einem Nothalt und somit zu einer klassischen Produktionsunterbrechung.

Es wäre jedoch auch denkbar, dass bei Feststellung eines gehäuft auftretenden Fehlers an einer bestimmten Umformungsstation diese zunächst (im laufenden Betrieb) nicht weiter mit Kunststoffvorformlinge bestückt wird und erst zu einem späteren Zeitpunkt, bei einem geplanten Betriebsstopp der Fehler an dieser Umformungsstation beseitigt wird.

Bei einer weiteren vorteilhaften Ausführungsform weist der Verriegelungsmechanismus eine stationär angeordnete Führungskurve auf, welche mit einer Führungsrolle zusammenwirkt wobei bevorzugt die Führungsrolle gegenüber dieser Führungskurve abrollt. Besonders bevorzugt weist jede Umformungsstation wenigstens eine derartige Führungsrolle auf. Die Führungskurve ist stationär angeordnet und die Führungsrollen der einzelnen Umformungsstationen rollen dieser gegenüber ab. Auf diese Weise können die besagten Bewegungen erreicht werden, wie beispielsweise das Öffnen und Schließen der Blasform, das Verriegeln mittels des Verriegelungsmechanismus, aber auch ggf. die Bewegungen einer Blasdüse, welche auf die Kunststoffvorformlinge aufgesetzt wird und/oder die Bewegung der oben erwähnten Reckstange.

Bevorzugt weist daher auch der Bewegungsmechanismus eine stationär angeordnete Führungskurve auf, welche mit einer Führungsrolle zusammenwirkt, wobei bevorzugt die Führungsrolle gegenüber dieser Führungskurve abrollt insbesondere um die Blasformen zu öffnen und/oder zu schließen.

Bei einer weiteren vorteilhaften Ausführungsform ist wenigstens eine Sensoreinrichtung aus einer Gruppe von Sensoreinrichtungen ausgewählt, welche Lichtschranken, Näherungssensoren, Kameras und dergleichen enthält. Bevorzugt handelt es sich bei der Sensoreinrichtung um eine Sensoreinrichtung, welche dazu geeignet ist, den Verriegelungszustand berührungslos zu erfassen.

Besonders bevorzugt handelt es sich bei der Sensoreinrichtung um eine Lichtschranke, welche dazu geeignet und bestimmt ist, den Durchtritt wenigstens eines Elements des Verriegelungsmechanismus, insbesondere einer Führungsrolle zu erfassen.

Bevorzugt ist die Sensoreinrichtung an oder auf einer Verriegelungskurve angeordnet.

Bei einer weiteren bevorzugten Ausführungsform ist eine Reinigungseinrichtung zum Reinigen der Sensoreinrichtung vorgesehen. So ist es beispielsweise möglich, dass die Reinigungseinrichtung eine Beaufschlagungseinrichtung, insbesondere eine Düse ist, welche die Sensoreinrichtungen mit einem fließfähigen Medium und insbesondere mit Druckluft zu deren Reinigung beaufschlagt.

Neben oder anstelle der Sensoreinrichtung, welche den Verriegelungszustand erfasst, könnte auch eine Sensoreinrichtung vorgesehen sein, welche eine bzw. den Verschlusszustand der Blasformträger erfasst (um auf diese Weise auf einen ordnungsgemäßen Verschluss der Blasformen zu schließen.

Bevorzugt ist jeder Umformungsstation eine derartige Sensoreinrichtung zugeordnet. Es wäre jedoch auch möglich, dass eine Sensoreinrichtung vorgesehen ist, welche beispielsweise stationär angeordnet ist und eine ordnungsgemäße Verriegelung der an ihr vorbei transportierten Umformungsstationen erfasst.

Bei einer bevorzugten Ausführungsform die stationäre Sensoreinrichtung zur Überprüfung der Verriegelung am Ende der Verriegelungskurve angeordnet.

Bevorzugt ist die stationäre Sensoreinrichtung dazu geeignet und bestimmt, die Position der Verriegelungsrolle nach dem Verlassen der Kurve zu bestimmen. Das korrekte Anliegen der Rolle an der Kurve kann mit Ausführungen nach dem Stand der Technik nicht erfasst werden.

Bei einer weiteren vorteilhaften Ausführungsform weist die Vorrichtung eine Ausschleuseeinrichtung auf, welche dazu geeignet und bestimmt ist, einen von einer nicht ordnungsgemäß verriegelten Umformungsstation behandelten Kunststoffvorformling auszuschleusen. Dies kann wie oben erwähnt beispielsweise über das Öffnen einer Greifklammer erfolgen, welche diesen Kunststoffvorformling hält.

Bei einer bevorzugten Ausführungsform weist die Vorrichtung eine Identifikationseinrichtung auf, um eine nicht ordnungsgemäß verriegelte Umformungsstation zu identifizieren. Diese Identifikation kann dadurch erfolgen, dass jeder Umformungsstation eine solche Sensoreinrichtung zugeordnet ist. Wenn jedoch lediglich eine oder wenige Sensoreinrichtungen vorgesehen sind, welche den Verriegelungszustand der an ihnen vorbei transportierten Umformungsstationen erfassen, wäre es hierbei möglich, dass die Identifikationseinrichtung Daten aus der Antriebseinrichtung der Trägereinrichtung, an der die Umformungsstationen angeordnet sind, erfasst, um auf diese Weise die Umformungsstation zu identifizieren. So kann beispielsweise die Sensoreinrichtung das Auftreten einer fehlerhaften Verriegelung erfassen und die Identifikationseinrichtung kann anschließend identifizieren, bei welcher Umformungsstation dieser Fehler aufgetreten ist.

Bei einer bevorzugten Ausführungsform ist die Steuerungseinrichtung dazu geeignet und bestimmt, einer Umformungsstation, bei welcher eine fehlerhafte Verriegelung festgestellt wurde, wenigstens zeitweise keine Kunststoffvorformlinge zu deren Expansion zuzuführen. Wie oben erwähnt, wird die Steuerungseinrichtung bewirken, dass nach Feststellen eines Fehlers wenigstens eine Kontrollrunde gefahren wird, bei der der betreffenden Umformungsstation kein Kunststoffvorformling zugeführt wird und bei der gleichzeig erfasst wird, ob diese Umformungsstation ordnungsgemäß schließt oder verriegelt.

Bei einer bevorzugten Ausführungsform weist die Vorrichtung eine Zählereinrichtung auf, um die von einer bestimmten Umformungsstation umgeformten Kunststoffbehältnisse zu zählen. Besonders bevorzugt ist die Zählereinrichtung dafür geeignet und bestimmt für jede Umformungsstation die Anzahl der produzierten "guten" Behältnisse insbesondere seit einer früheren aufgetretenen Störung mitzuzählen.

Bevorzugt ist diese Zählereinrichtung einstellbar, bzw. ein Grenzwert dieser Zählereinrichtung ist einstellbar. Wird diese Zählereinrichtung bzw. deren bestimmter Wert überschritten, kann dies zu einem Produktionsstopp führen, um die entsprechende Umformungsstation auf Fehler zu überprüfen. Dies ist dann relevant, wenn bei bestimmten Umformungsstationen mit einer höheren Wahrscheinlichkeit Fehlerzustände auftreten. Wie erwähnt wäre es jedoch in diesem Fall auch möglich, eine solche Umformungsstation, bei welcher eine höhere Anzahl an Störfällen festgestellt wurde, zeitweise abzuschalten (bei laufendem Betrieb) bzw. dieser Umformungsstation zeitweise keine Kunststoffvorformlinge zuzuführen.

Ein Vorteil der Erfindung besteht darin, dass derartige Fehler keinen oder kaum Einfluss auf die Linienverfügbarkeit haben, da nur einzelne Behältnisse nicht für die Produktion zur Verfügung stehen. Daneben werden wesentlich weniger Kosten hinsichtlich der Kunststoffvorformlinge erreicht, da deren Ausschlussrate deutlich reduziert ist. Daneben kann auch die Maschinenverfügbarkeit erhöht werden. Weiterhin entsteht auch weniger Entsorgungsmaterial und es wird auch weniger Arbeitskraft durch eine derartige Maschine gebunden.

Die vorliegende Erfindung ist weiterhin auf ein Verfahren zum Umformen von Kunststoffvorformlingen zu Kunststoffbehältnissen gerichtet, wobei die Kunststoffvorformlinge mittels eines drehbaren Trägers, an dem eine Vielzahl von Umformungsstationen zum Umformen der Kunststoffvorformlinge zu den Kunststoffbehältnissen angeordnet ist, transportiert werden, wobei die Umformungsstationen jeweils Beaufschlagungseinrichtungen aufweisen, welche die Kunststoffvorformlinge mit einem fließfähigen und insbesondere gasförmigen Medium zu deren Expansion beaufschlagen und wobei die Umformungsstationen jeweils Blasformträger aufweisen, an denen Blasformen angeordnet sind, innerhalb derer die Kunststoffvorformlinge zu den Kunststoffbehältnissen umgeformt werden und ein erster Bewegungsmechanismus vorgesehen ist, welcher die Blasformen öffnet und/oder schließt und wobei weiterhin ein Verriegelungsmechanismus vorgesehen ist, um die Blasformträger (insbesondere mit den daran angeordneten Blasformen bzw. Blasformteilen) wenigstens zeitweise während des Expansionsvorgangs der Kunststoffvorformlinge miteinander zu verriegeln.

Erfindungsgemäß ist wenigstens eine Sensoreinrichtung vorgesehen, welche einen Verriegelungszustand der Verriegelungsmechanismen wenigstens einer Umformungsstation erfasst und welche wenigstens ein Signal ausgibt, welches für diesen Verriegelungszustand charakteristisch ist.

Besonders bevorzugt steuert eine Steuerungseinrichtung die Vorrichtung auch unter Berücksichtigung dieses Signals.

Bei einem weiteren bevorzugten Verfahren wird eine Umformungsstation, welche nicht ordnungsgemäß verriegelt wurde, identifiziert und dieser Umformungsstation werden wenigstens zeitweise keine Kunststoffvorformlinge zugeführt.

Bei einem weiteren bevorzugten Verfahren wird ein von einer nicht ordnungsgemäß verriegelten Umformungsstation umzuformender Kunststoffvorformling ausgeschleust.

Bei einem weiteren bevorzugten Verfahren erfolgt die Öffnungs- und/oder Schließbewegung der Umformungsstationen und/oder die Verriegelung und/oder die Entriegelung mittels einer stationären Führungskurve.

Weitere Vorteile und Ausführungsformen ergeben sich aus den beigefügten Zeichnungen.

Darin zeigen:
- Fig. 1: eine schematische Darstellung einer erfindungsgemäßen Vorrichtung;
- Fig. 2: eine Detailansicht einer erfindungsgemäßen Vorrichtung;
- Fig. 3: eine Darstellung einer Umformungsstation und einer Sensoreinrichtung; und
- Fig. 4: ein Detail der in Fig 3 gezeigten Darstellung.

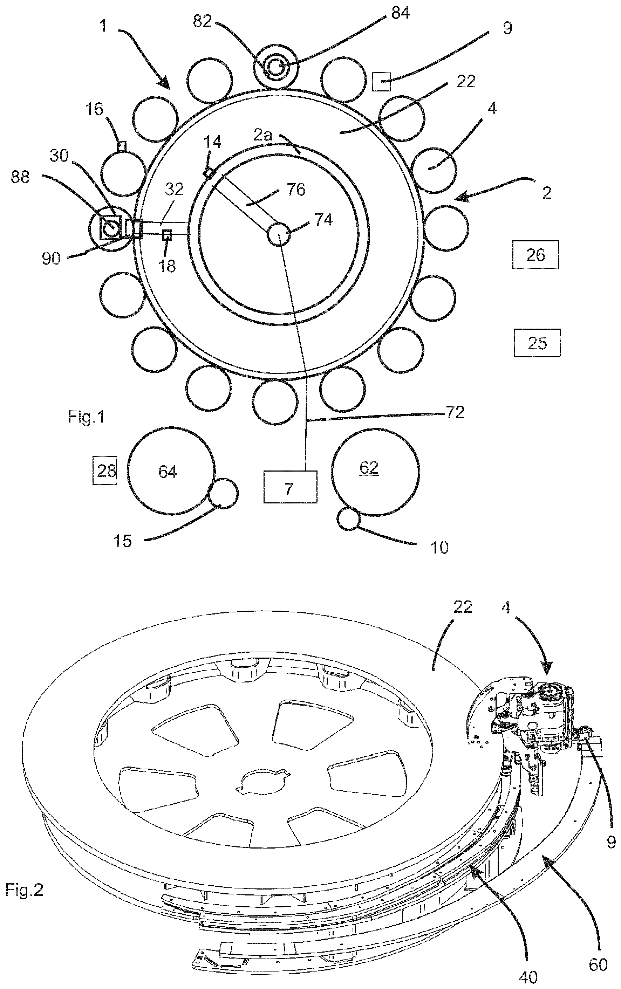

Fig. 1 zeigt eine schematische Darstellung einer erfindungsgemäßen Vorrichtung zum Umformen von Kunststoffvorformlingen zu Kunststoffbehältnissen. Dabei ist eine Zuführeinrichtung 62 wie etwa ein Transportrad vorgesehen, welches die umzuformenden Kunststoffvorformlinge 10 der eigentlichen Umformungsstation bzw. den Umformungsstationen 4 zuführt. Diese Umformungsstationen 4 sind an einem drehbaren Träger 22 angeordnet.

Das Bezugszeichen 2 kennzeichnet die Umformungseinrichtung in ihrer Gesamtheit. Das Bezugszeichen 84 kennzeichnet schematisch eine Beaufschlagungseinrichtung, welche den in einer Blasform 82 angeordneten Kunststoffvorformlingen Druckluft zuführt, um diese zu expandieren.

Das Bezugszeichen 88 kennzeichnet eine Reckstange, welche in die Kunststoffvorformlinge einführbar ist. Daneben kann ein Ventilblock vorgesehen sein, der eine Vielzahl von Ventilen aufweist, mittels derer die Druckbeaufschlagung der Kunststoffvorformlinge gesteuert wird.

Das Bezugszeichen 16 kennzeichnet schematisch eine Sensoreinrichtung, welche einen ordnungsgemäßen Verriegelungszustand der einzelnen Umformungsstationen erfasst.

Ausgehend von einer Druckluftquelle 7 wie etwa einem Kompressor wird Druckluft über eine Druckluftleitung 72 an einen Verteiler wie etwa einen Drehverteiler 74 geführt. Von dort aus werden mehrere Druckluftreservoirs 2a (nur eines gezeigt), welche insbesondere als Ringkanäle ausgebildet sind, jeweils über Verbindungsleitungen 76 mit Druckluft versorgt. Das Bezugszeichen 14 kennzeichnet eine Druckmesseinrichtung, welche den Druck innerhalb des Ringkanals 2a misst.

Über eine Vielzahl von Verbindungsleitungen 32 werden den einzelnen Umformungsstationen 4 mehrere Druckniveaus zugeführt. Das Bezugszeichen 18 kennzeichnet einen weiteren Druckmesser.

Die gefertigten Kunststoffflaschen 15 werden über eine Abführeinrichtung 64 abgeführt. In diesem Bereich kann eine Steuerungseinrichtung 28 vorgesehen sein, welche den Auswurf fehlerhafter Kunststoffvorformlinge und insbesondere solcher Kunststoffvorformlinge, die sich in Umformungsstationen befanden, welche nicht ordnungsgemäß verriegelten, auswirft.

Das Bezugszeichen 52 kennzeichnet eine (nur schematisch dargestellte) Führungskurve, welche ein Verschließen der einzelnen Blasformen der Umformungsstationen 4 bewirkt. Das Bezugszeichen 54 kennzeichnet eine weitere Führungskurve, welche insbesondere im Anschluss an das Verschließen der Blasform deren Verriegelung bewirkt. Bevorzugt wird, nachdem die Umformungsstationen diese Führungskurve 54 passiert haben, bzw. in einem Zustand sind, in dem sie verriegelt sein sollen, dieser Verriegelungszustand abgefragt, bzw. geprüft. Sollte eine bestimmte Blasform nicht ordnungsgemäß verriegelt sein, wird bevorzugt die betreffende Umformungsstation derart gesteuert, dass kein Blasformvorgang erfolgt. Damit wird der an oder in dieser Umformungsstation befindliche Kunststoffvorformling nicht umgeformt.

Das Bezugszeichen 25 kennzeichnet eine Steuerungseinrichtung, welche die gesamte Vorrichtung steuert. Diese kann beispielsweise steuern, dass einer Umformungsstation, welche nicht ordnungsgemäß verriegelte, in einem weiteren Durchlauf kein Kunststoffvorformling zugeführt wird.

Das Bezugszeichen 26 kennzeichnet eine Zähleinrichtung, welche dazu geeignet und bestimmt ist, für jede einzelne Umformungsstation beispielweise die Anzahl der Ausfälle bzw. die Anzahl nicht ordnungsgemäßer Verriegelungen zu zählen. Auch kann gezählt werden, wie viele Kunststoffvorformlinge eine bestimmte Umformungsstation ordnungsgemäß in einem bestimmten Zeitraum produziert hat. Das Bezugszeichen 9 kennzeichnet grob schematisch eine Sensoreinrichtung zum Erfassen eines Verriegelungszustandes.

Fig. 2 zeigt eine Detailansicht der in Fig. 1 gezeigten Vorrichtung. Dabei ist wiederum der drehbare Träger 22 gezeigt sowie eine an diesem Träger 22 angeordnete Umformungsstation 4 (weitere Umformungsstationen sind nicht dargestellt).

Das Bezugszeichen 40 kennzeichnet schematisch einen Bewegungsmechanismus, der zum Öffnen der Blasformen dient. Zu diesem Zweck sind eine oder mehrere Führungskurven vorgesehen, welche im Zusammenspiel mit wenigstens einer an der Umformungsstation angeordneten Führungsrolle hier ein Schließen der Blasform bewirken.

Das Bezugszeichen kennzeichnet einen Verriegelungsmechanismus 60 bzw. einen Teil eines solchen, nämlich eine weitere Führungskurve.

Das Bezugszeichen 9 kennzeichnet eine bevorzugt stationär angeordnete Sensoreinrichtung die zum Erfassen einer ordnungsgemäßen Verriegelung dient. Bevorzugt ist diese Sensoreinrichtung 9 an der Verriegelungskurve und insbesondere am Ende dieser Verriegelungskurve angeordnet.

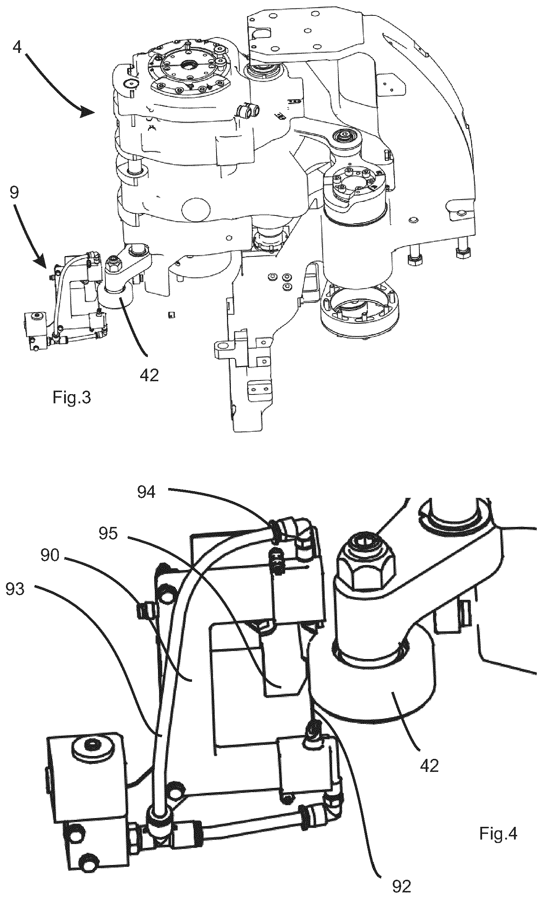

Fig. 3 zeigt eine weitere Darstellung einer Umformungsstation 4 und der Sensoreinrichtung 9. Das Bezugszeichen 42 kennzeichnet eine Führungsrolle, welche ebenfalls einen Bestandteil des Verriegelungsmechanismus bildet. Die Sensoreinrichtung 9 ist hier eine Lichtschrankeneinheit, die bevorzugt eine Position dieser Führungsrolle erfasst.

Fig. 4 zeigt eine detailliertere Darstellung dieser Sensoreinrichtung 9. Diese weist einen C-förmig ausgebildeten Träger 90 auf, an dem die Lichtschrankeneinheit 92 ausgebildet ist. Diese Lichtschrankeneinheit kann dabei eine Lichtquelle und einen Sensor aufweisen, welche den Durchtritt der Führungsrolle erfassen können. Wenn der Lichtstrahl der Lichtschrankeneinheit nicht unterbrochen wird, dann ist die betreffende Umformungsstation 4 nicht ordnungsgemäß verriegelt. Die Sensoreinrichtung und insbesondere auch der Träger 90 sind bevorzugt an einem Auslauf der in Fig. 4 nicht gezeigten Verriegelungskurve angeordnet.

Das Bezugszeichen 94 kennzeichnet eine Reinigungseinrichtung zum Reinigen der Sensoreinrichtung insbesondere eines Empfängers der Sensoreinrichtung. Das Bezugszeichen 93 kennzeichnet einen Druckluftleitung, um die Reinigungseinrichtung mit Druckluft zum Reinigen der Sensoreinrichtung zu versorgen.

Das Bezugszeichen 95 kennzeichnet eine Einstelleinrichtung und insbesondere ein Einstellblech, um einen Abstand zwischen der Sensoreinrichtung 9 und der Führungsrolle einzustellen. Insbesondere kann hierdurch die Sensoreinrichtung justiert werden.

## Patentansprüche

1. Vorrichtung (1) zum Umformen von Kunststoffvorformlingen zu Kunststoffbehältnissen (15) mit einem drehbaren Träger (22), an dem eine Vielzahl von Umformungsstationen (4) zum Umformen der Kunststoffvorformlinge (10) zu den Kunststoffbehältnissen (15) angeordnet sind, wobei die Umformungsstationen jeweils Beaufschlagungseinrichtungen (82) aufweisen, um die Kunststoffvorformlinge (10) mit einem fließfähigen Medium zu deren Expansion zu beaufschlagen und wobei die Umformungsstationen jeweils Blasformträger aufweisen, an denen Blasformen anordenbar sind, innerhalb derer die Kunststoffvorformlinge zu den Kunststoffbehältnissen umformbar sind und ein erster Bewegungsmechanismus (40) vorgesehen ist, um die Blasformen zu öffnen und/oder zu schließen und wobei weiterhin ein Verriegelungsmechanismus (60) vorgesehen ist, um die Blasformträger wenigstens zeitweise während des Expansionsvorgangs der Kunststoffvorformlinge miteinander zu verriegeln, wobei die Vorrichtung wenigstens eine Sensoreinrichtung aufweist, welche einen Verriegelungszustand des Verriegelungsmechanismus wenigstens einer Umformungsstation erfasst und welche wenigstens ein Signal ausgibt, welches für diesen Verriegelungszustand charakteristisch ist,
**dadurch gekennzeichnet, dass**
die Vorrichtung eine Ausschleuseeinrichtung aufweist, welche dazu geeignet und bestimmt ist, einen von einer nicht ordnungsgemäß verriegelten Umformungsstation behandelten Kunststoffvorformling auszuschleusen..

2. Vorrichtung (1) nach Anspruch 1,
**dadurch gekennzeichnet, dass**
die Vorrichtung eine Steuerungseinrichtung aufweist, welche die Vorrichtung unter Berücksichtigung des von der ersten Sensoreinrichtung ausgegebenen Signals steuert.

3. Vorrichtung (1) nach wenigstens einem der vorangegangenen Ansprüche,
**dadurch gekennzeichnet, dass**
der Verriegelungsmechanismus (60) eine stationär angeordnete Führungskurve aufweist, welche mit einer Führungsrolle zusammenwirkt, wobei bevorzugt die Führungsrolle gegenüber dieser Führungskurve abrollt.

4. Vorrichtung (1) nach wenigstens einem der vorangegangenen Ansprüche,
**dadurch gekennzeichnet, dass**
der Bewegungsmechanismus (40) eine stationär angeordnete Führungskurve aufweist, welche mit einer Führungsrolle zusammenwirkt, wobei bevorzugt die Führungsrolle gegenüber dieser Führungskurve abrollt.

5. Vorrichtung (1) nach wenigstens einem der vorangegangenen Ansprüche,
**dadurch gekennzeichnet, dass**
die wenigstens eine Sensoreinrichtung aus einer Gruppe von Sensoreinrichtungen ausgewählt ist, welche Lichtschranken, Näherungssensoren, Kameras und dergleichen enthält.

6. Vorrichtung (1) nach wenigstens einem der vorangegangenen Ansprüche,
**dadurch gekennzeichnet, dass**
die Vorrichtung eine Identifikationseinrichtung aufweist, um eine nicht ordnungsgemäße verriegelte Umformungsstation zu identifizieren.

7. Vorrichtung (1) nach wenigstens einem der vorangegangenen Ansprüche,
**dadurch gekennzeichnet, dass**
die Steuerungseinrichtung dazu geeignet und bestimmt ist, einer Umformungsstation, bei welcher eine fehlerhafte Verriegelung festgestellt wurde, wenigstens zeitweise keine Kunststoffvorformlinge zu deren Expansion zuzuführen.

8. Vorrichtung (1) nach wenigstens einem der vorangegangenen Ansprüche,
**dadurch gekennzeichnet, dass**
die Vorrichtung (1) eine Zähleinrichtung aufweist, um die von einer bestimmten Umformungsstation umgeformten Kunststoffbehältnisse zu zählen.

9. Vorrichtung (1) nach wenigstens einem der vorangegangenen Ansprüche,
**dadurch gekennzeichnet, dass**
die Vorrichtung (1) wenigstens eine Reinigungseinrichtung zum Reinigen der Sensoreinrichtung aufweist.

10. Vorrichtung (1) nach dem vorangegangenen Anspruch,
**dadurch gekennzeichnet, dass**
die Reinigungseinrichtung wenigstens eine Beaufschlagungseinrichtung aufweist, welche die Sensoreinrichtung mit einem fließfähigen Medium und insbesondere mit Druckluft beaufschlagt.

11. Verfahren zum Umformen von Kunststoffvorformlingen (10) zu Kunststoffbehältnissen (15), wobei die Kunststoffvorformlinge (10) mittels eines drehbaren Trägers (22), an dem eine Vielzahl von Umformungsstationen (4) zum Umformen der Kunststoffvorformlinge (10) zu den Kunststoffbehältnissen (15) angeordnet ist, transportiert werden, wobei die Umformungsstationen (4) jeweils Beaufschlagungseinrichtungen (82) aufweisen, welche die Kunststoffvorformlinge (10) mit einem fließfähigen Medium zu deren Expansion beaufschlagen und wobei die Umformungsstationen (4) jeweils Blasformträger aufweisen, an denen Blasformen angeordnet sind, innerhalb derer die Kunststoffvorformlinge (10) zu den Kunststoffbehältnissen (15) umgeformt werden und ein erster Bewegungsmechanismus (40) vorgesehen ist, welcher die Blasformen öffnet und/oder schließt und wobei weiterhin ein Verriegelungsmechanismus (60) vorgesehen ist, um die Blasformträger wenigstens zeitweise während des Expansionsvorgangs der Kunststoffvorformlinge (10) miteinander zu verriegeln, wobei wenigstens eine Sensoreinrichtung vorgesehen ist, welche einen Verriegelungszustand der Verriegelungsmechanismen wenigstens einer Umformungsstation (4) erfasst und welche wenigstens ein Signal ausgibt, welches für diesen Verriegelungszustand charakteristisch ist,
**dadurch gekennzeichnet, dass**
ein von einer nicht ordnungsgemäß verriegelten Umformungsstation (4) umzuformender Kunststoffvorformling (10) ausgeschleust wird.

12. Verfahren nach Anspruch 11,
**dadurch gekennzeichnet, dass**
eine Umformungsstation (4), welche nicht ordnungsgemäß verriegelt wurde, identifiziert wird und dieser Umformungsstation (4) wenigstens zeitweise keine Kunststoffvorformlinge (10) zugeführt werden.

13. Verfahren nach Anspruch 11,
**dadurch gekennzeichnet, dass**
eine die Öffnungs- und/oder Schließbewegung der Umformungsstationen (4) und/oder die Verriegelung und/oder die Entriegelung mittels einer stationären Führungskurve erfolgt.

## Claims

1. An apparatus (1) for forming plastic preforms into plastic containers (15) comprising a rotatable carrier (22) on which a plurality of forming stations (4) for forming the plastic preforms (10) into plastic containers (15) are arranged, wherein the forming stations each have application devices (82) for applying a flowable medium to the plastic preforms (10) for the expansion thereof, and wherein the forming stations each have blow mold carriers on which blow molds can be arranged, within which the plastic preforms can be formed into plastic containers and a first movement mechanism (40) is provided for opening and/or closing the blow molds and wherein further a locking mechanism (60) is provided for locking the blow mold carriers together at least temporarily during the expansion process of the plastic preforms, wherein the apparatus has at least one sensor device which detects a locking state of the locking mechanism of at least one forming station and which outputs at least one signal which is characteristic of this locking state,
**characterized in that**
the apparatus has apparatus has an ejection device which is suitable and intended for ejecting a plastic preform treated by an improperly locked forming station.

2. The apparatus (1) according to claim 1,
**characterized in that**
the apparatus has a control device which controls the apparatus while taking into account the signal output by the first sensor device.

3. The apparatus (1) according to at least one of the preceding claims,
**characterized in that**
the locking mechanism (60) has a guide cam arranged in a stationary manner, which guide cam interacts with a guide roller, wherein the guide roller rolls over this guide cam.

4. The apparatus (1) according to at least one of the preceding claims,
**characterized in that**
the movement mechanism (40) has a guide cam arranged in a stationary manner, which guide cam interacts with a guide roller, wherein the guide roller rolls over this guide cam.

5. The apparatus (1) according to at least one of the preceding claims,
**characterized in that**
the at least one sensor device is selected from a group of sensor devices which includes light barriers, proximity sensors, cameras, and the like.

6. The apparatus (1) according to at least one of the preceding claims,
**characterized in that**
the apparatus has an identification device for identifying an improperly locked forming station.

7. The apparatus (1) according to at least one of the preceding claims,
**characterized in that**
the control device is suitable and intended for at least temporarily not supplying any plastic preforms for the expansion thereof to a forming station in which a faulty locking has been determined.

8. The apparatus (1) according to at least one of the preceding claims,
**characterized in that**
the apparatus (1) has a counting device for counting the plastic containers formed by a particular forming station.

9. The apparatus (1) according to at least one of the preceding claims,
**characterized in that**
the apparatus (1) has at least one cleaning device for cleaning the sensor device.

10. The apparatus (1) according to the preceding claim,
**characterized in that**
the cleaning device has at least one application device which applies a flowable medium and in particular compressed air to the sensor device.

11. A method for forming plastic preforms (10) into plastic containers (15), wherein the plastic preforms (10) are transported by means of a rotatable carrier (22), on which a plurality of forming stations (4) for forming the plastic preforms (10) into the plastic containers (15) are arranged, wherein the forming stations (4) each have application devices (82) which apply a flowable medium to the plastic preforms (10) for the expansion thereof, and wherein the forming stations (4) each have blow mold carriers, on which blow molds are arranged, within which the plastic preforms (10) are formed into plastic containers (15) and a first movement mechanism (40) is provided for opening and/or closing the blow molds and wherein further a locking mechanism (60) is provided which locks the blow mold carriers together at least temporarily during the expansion process of the plastic preforms (10), wherein at least one sensor device is provided which detects a locking state of the locking mechanisms of at least one forming station (4) and which outputs at least one signal which is characteristic of this locking state,
**characterized in that**
a plastic preform (10) to be formed by an improperly locked forming station (4) is ejected.

12. The method according to claim 11,
**characterized in that**
a forming station (4) which has not been properly locked is identified and at least temporarily no plastic preforms (10) are supplied to this forming station (4).

13. The method according to claim 11,
**characterized in that**
the opening and/or closing movement of the forming stations (4) and/or the locking and/or unlocking are effected by a stationary guide cam.

## Revendications

1. Dispositif (1) de formage de préformes en plastique en récipients en plastique (15) avec un support rotatif (22) sur lequel sont disposées une pluralité de stations de formage (4) pour le formage des préformes en plastique (10) en les récipients en plastique (15), dans lequel les stations de formage présentent respectivement des systèmes de sollicitation (82) pour solliciter les préformes en plastique (10) avec un milieu fluide pour l'expansion de celles-ci et dans lequel les stations de formage présentent respectivement des supports de moule de soufflage sur lesquels des moules de soufflage peuvent être disposés, à l'intérieur desquels les préformes en plastique peuvent être formées en les récipients en plastique et un premier mécanisme de mouvement (40) est prévu pour ouvrir et/ou pour fermer les moules de soufflage et dans lequel un mécanisme de verrouillage (60) est en outre prévu pour verrouiller les supports de moule de soufflage au moins temporairement entre eux pendant le processus d'expansion des préformes en plastique, dans lequel le dispositif présente au moins un système de capteur, lequel détecte un état de verrouillage du mécanisme de verrouillage d'au moins une station de formage et lequel émet au moins un signal, lequel est caractéristique de cet état de verrouillage,
**caractérisé en ce que**
le dispositif présente un système d'éjection, lequel est adapté pour et destiné à éjecter une préforme en plastique traitée par une station de formage non correctement verrouillée.

2. Dispositif (1) selon la revendication 1,
**caractérisé en ce que**
le dispositif présente un système de commande, lequel commande le dispositif en tenant compte du signal émis par le premier système de capteur.

3. Dispositif (1) selon au moins l'une quelconque des revendications précédentes,
**caractérisé en ce que**
le mécanisme de verrouillage (60) présente une came de guidage disposée de manière fixe, laquelle coopère avec un galet de guidage, dans lequel de préférence le galetde guidage roule de préférence par rapport à cette came de guidage.

4. Dispositif (1) selon au moins l'une quelconque des revendications précédentes,
**caractérisé en ce que**
le mécanisme de mouvement (40) présente une came de guidage disposée de manière fixe, laquelle coopère avec un galet de guidage, dans lequel le galet de guidage roule de préférence par rapport à cette came de guidage.

5. Dispositif (1) selon au moins l'une quelconque des revendications précédentes,
**caractérisé en ce que**
l'au moins un système de capteur est sélectionné dans un groupe de systèmes de capteur, lequel contient des barrières lumineuses, des capteurs de proximité, des caméras et similaires.

6. Dispositif (1) selon au moins l'une quelconque des revendications précédentes,
**caractérisé en ce que**
le dispositif présente un système d'identification pour identifier une station de formage non correctement verrouillée.

7. Dispositif (1) selon au moins l'une quelconque des revendications précédentes,
**caractérisé en ce que**
le système de commande est adapté et destiné à ne pas amener au moins temporairement des préformes en plastique pour l'expansion de celles-ci à une station de formage pour laquelle un verrouillage défectueux a été constaté.

8. Dispositif (1) selon au moins l'une quelconque des revendications précédentes,
**caractérisé en ce que**
le dispositif (1) présente un système de comptage pour compter les récipients en plastique formés par une station de formage déterminée.

9. Dispositif (1) selon au moins l'une quelconque des revendications précédentes,
**caractérisé en ce que**
le dispositif (1) présente au moins un système de nettoyage pour nettoyer le système de capteur.

10. Dispositif (1) selon la revendication précédente,
**caractérisé en ce que**
le système de nettoyage présente au moins un système de sollicitation, lequel sollicite le système de capteur avec un milieu fluide et en particulier avec de l'air comprimé.

11. Procédé de formage de préformes en plastique (10) en récipients en plastique (15), dans lequel les préformes en plastique (10) sont transportées au moyen d'un support rotatif (22) sur lequel une pluralité de stations de formage (4) sont disposées pour le formage des préformes en plastique (10) en les récipients en plastique (15), dans lequel les stations de formage (4) présentent respectivement des systèmes de sollicitation (82), lesquels sollicitent les préformes en plastique (10) avec un milieu fluide pour l'expansion de celles-ci et dans lequel les stations de formage (4) présentent respectivement des supports de moule de soufflage sur lesquels sont disposés des moules de soufflage à l'intérieur desquels les préformes en plastique (10) sont formées en les récipients en plastique (15) et un premier mécanisme de mouvement (40) est prévu, lequel ouvre et/ou ferme les moules de soufflage et dans lequel un mécanisme de verrouillage (60) est en outre prévu pour verrouiller les supports de moule de soufflage au moins temporairement entre eux pendant le processus d'expansion des préformes en plastique (10), dans lequel au moins un système de capteur est prévu, lequel détecte un état de verrouillage des mécanismes de verrouillage d'au moins une station de formage (4) et lequel émet au moins un signal, lequel est caractéristique de cet état de verrouillage,
**caractérisé en ce que**
une préforme en plastique (10) à former est évacuée d'une station de formage (4) non correctement verrouillée.

12. Procédé selon la revendication 11,
**caractérisé en ce que**
une station de formage (4), laquelle n'a pas été correctement verrouillée, est identifiée et aucune préforme en plastique (10) n'est amenée au moins temporairement à cette station de formage (4).

13. Procédé selon la revendication 11,
**caractérisé en ce que**
le mouvement d'ouverture et/ou de fermeture des stations de formage (4) et/ou le verrouillage et/ou le déverrouillage s'effectue au moyen d'une came de guidage fixe.
